# EUROPÄISCHE PATENTANMELDUNG

(11) **EP 1 469 224 A2**
(43) Veröffentlichungstag der Anmeldung: **20.10.2004**
(21) Anmeldenummer: 04004298.8
(22) Anmeldetag: 26.02.2004
(51) Int. Cl.: F16F 3/10, F16F 15/02, F16F 7/02

(54) **Aktiver Feder-Dämpfungsmechanismus**

(30) Priorität: 13.04.2003 DE 10317082
(71) Anmelder: Continental Aktiengesellschaft, 30165 Hannover (DE)
(72) Erfinder: Tschimmel, Jürgen, 30419 Hannover (DE); Härtel, Volker, 82110 Germering (DE); Lorenz, Marc, 30179 Hannover (DE)

(57) **Zusammenfassung**

Feder-Dämpfungsmechanismus zur Dämpfung von mechanischen Schwingungen, mit wenigstens einem Tragfederelement und mindestens einem Dämpfungselement, die zwischen einer schwingungssteifen Struktur und einem schwingbar gelagerten Bauteil angeordnet sind, wobei das Tragfederelement (3) in der Hauptdämpfungsrichtung (42) des Feder-Dämpfungsmechanismus (1, 14, 24, 25, 29, 30, 30, 34) über keine wesentlichen Dämpfungseigenschaften verfügt, wobei das Dämpfungselement als ein in Hauptdämpfungsrichtung (42) wirkender schalt- und/oder regelbarer Reibungsdämpfer (6, 21, 40) ausgebildet ist, und bei dem der Feder-Dämpfungsmechanismus (1) mindestens ein elastomeres Feder-Dämpferelement (5) aufweist, welches in mindestens einer zur Hauptdämpfungsnchtung (42) senkrechten Richtung schwingungsdämpfend wirkt.

## Beschreibung

Die Erfindung betrifft einen aktiven Feder-Dämpfungsmechanismus zur Dämpfung von mechanischen Schwingungen gemäß dem Oberbegriff des Patentanspruchs 1.

Üblicherweise beinhaltet ein passiver Feder-Dämpfungsmechanismus einerseits eine Tragfeder für die Aufnahme statischer und dynamischer Lasten und andererseits ein Dämpfungselement zur Dämpfung von in einem System störenden Schwingungen, wie beispielsweise Überschwingungen und Resonanzschwingungen. Ein aktiver Feder-Dämpfungsmechanismus ist grundsätzlich ebenso aufgebaut, jedoch sind dessen Steifigkeiten oder Dämpfungseigenschaften steuerbar oder regelbar.

Teilweise sind auch Dämpfungs- und Federungseigenschaften in einem Bauteil kombiniert, etwa in einem Gummi-Metall-Motorlager oder auch in einem dementsprechenden Hydrolager. Bei einem Gummi-Metall-Lager übernimmt das Elastomer die Tragfunktion und stellt darüber hinaus Dämpfungseigenschaften bereit. Das oder die Metallbauteile eines solchen Gummi-Metall-Lagers dienen lediglich der mechanischen Ankopplung dieses Lagers zwischen dem zu lagernden und einem schwingungsfesten Bauteil.

Bei einem Hydrolager übernimmt dessen Gummistruktur bekannterweise die Tragfunktion und einen Teil der Dämpfung, während ein in speziellen Dämpfungskanälen geführtes Fluid bei Bewegung des Lagers Schwingungen zusätzlich dämpft. So sind zum Beispiel auch passive Motorlagerungen als Gummi-Metall-Elemente aufgebaut, wobei gewünschte Dämpfungsmaxima teilweise durch Fluide ermöglicht werden, welche in das Lager integriert sind.

Die Nachteile solcher konventionellen Fahrzeuglager sind erhöhte Steifigkeiten bei hohen Anregungsfrequenzen, die als sogenannte Harshness-Problematik bekannt ist, sowie Setzerscheinungen des Lagers wie beispielsweise bei Gummi-Lagern durch Kriechprozesse infolge der Eigenschaften der verwendeten Elastomere. Häufig werden zudem die Lagersysteme an einem Metallausleger fixiert, wodurch zusätzliche Bauelemente notwendig werden.

Ein alternatives Konzept zur Übernahme der Federfunktion ist die Verwendung von Faser-Verbund-Kunststoffen (FVK). Bei diesem Konzept werden Federelemente in verschiedenen Techniken hergestellt, z.B. durch Spritzgussverfahren, bei denen kurze Faserstücke mit einem Kunstharz vermischt und diese Mischung anschließend in oder durch eine Form gespritzt wird. Zudem sind Wickelverfahren bekannt, bei denen Kunststoff-Folien oder Kunststoff-Streifen mit Langfasern auf Formkörpern aufgewickelt, mit Kunstharz getränkt sowie anschließend ausgehärtet werden. Die Vorteile solcher FVK liegen insbesondere darin, dass Setzerscheinungen oder dynamische Verhärtungen wie beim Gummi nicht auftreten und dass bei vergleichbaren mechanischen Eigenschaften leichtere Bauteile oder Produkte herstellbar sind. Nachteilig an diesen Herstellverfahren sind unter anderem die vergleichsweise hohen Kosten sowie niedrige Dämpfungswerte der FVK-Strukturen. Zudem lassen sich zusätzliche Dämpfungselemente schwierig integrieren.

Darüber hinaus ist die entweder durch die Materialeigenschaften oder ein in Kanälen geführtes Fluid bereitgestellte Dämpfung bei passiven Lagern lediglich voreingestellt und somit nur für einen bestimmten dynamischen Bereich optimal ausgelegt. Bei aktiv schaltbar ausgebildeten Lagern sind diese zwar in mehrere Bereichen auf unterschiedliche dynamischen Verhältnisse einstellbar, aber eben nur in diskreten Stufen. Weiterhin ist bei solchen Lagern eine vollkommene Funktionstrennung einzelner Bauteile in die Funktionen Federsteifigkeit und Dämpfung nicht möglich. Daraus resultiert auch, dass kein völlig ungedämpftes Lager erreichbar ist, jedenfalls nicht in praktisch relevanten Bereichen.

Für die Erfindung besteht demnach die Aufgabe, einen Feder-Dämpfungsmechanismus bereitzustellen, bei dem zum einen eine Funktionstrennung von Federsteifigkeit und Dämpfung möglich ist, bei dem eine Dämpfungsregelung frei und stufenlos erfolgen kann, bei dem bei hohen Anregungsfrequenzen keine Verhärtung hinsichtlich der Dämpfungseigenschaften auftritt, also z.B. bei einem Kfz-Motorlager keine Komfortverschlechterung eintritt, und bei dem die Dämpfungskraft variabel einstellbar ist.

Gelöst wird diese Aufgabe durch die Merkmale des Hauptanspruchs, während vorteilhafte Weiterbildungen der Erfindung den Unteransprüchen entnehmbar sind.

Demnach wird ein Feder-Dämpfungsmechanismus zur Dämpfung von mechanischen Schwingungen vorgeschlagen, der über wenigstens ein Tragfederelement und mindestens ein Dämpfungselement verfügt, die zwischen einer schwingungssteifen Struktur und einem schwingbar gelagerten Bauteil angeordnet sind. Erfindungsgemäß ist dieser Feder-Dämpfungsmechanismus nun so ausgebildet, dass das Tragfederelement in der Hauptdämpfungsrichtung des Feder-Dämpfungsmechanismus über keine wesentlichen Dämpfungseigenschaften verfügt, dass das Dämpfungselement als ein in Hauptdämpfungsrichtung wirkender schalt- und/oder regelbarer Reibungsdämpfer ausgebildet ist, und dass der Feder-Dämpfungsmechanismus mindestens ein elastomeres Feder-Dämpferelement aufweist, welches in mindestens einer zur Hauptdämpfungsrichtung senkrechten Richtung schwingungsdämpfend wirkt.

Durch diesen Aufbau wird eine einwandfreie und für alle praktischen Zwecke ausreichende Funktionstrennung sowie eine schnell steuerbare und variabel in ihrer Dämpfungsstärke einstellbare Dämpfung erreicht. Die Steuerung- und/oder Regelung der Dämpfung dieses Feder-Dämpfungsmechanismus kann beispielsweise bei zwei flächigen Metall-Reibelementen durch einwirkende Magnetkräfte erfolgen. Es ist aber auch denkbar, dass die genannten Reibpartner durch Piezoelemente, Linearmotoren, hydraulische oder pneumatische Aktuatoren gegeneinander gepresst werden. Hierbei besteht der große Vorteil, dass die Dämpfung des erfindungsgemäßen Feder-Dämpfungsmechanismus stufenlos auch während einer Schwingungsbewegung durchführbar ist, so dass sehr schnell und gezielt störende Teile eine Schwingung herausgedämpft werden können.

In diesem Zusammenhang ist es sehr zweckmäßig, wenn die Steuerung und Reglung des Reibungsdämpfers hinsichtlich der Reibkräfte und Dämpfungseigenschaften elektrisch steuerbar ausgebildet ist. Dazu ist der elektrisch wirksame Teil des Feder-Dämpfungsmechanismus über Steuerungsleitungen mit einem Steuerungs- und Regelungsgerät verbunden, welches aufgrund von Sensorinformationen sowie mit Hilfe abgespeicherter Steuerungs- und Regelungsanweisungen die Dämpfungseigenschaften des Feder-Dämpfungsmechanismus steuert und regelt.

Darüber hinaus wird es hinsichtlich des Bauteilgewichts als vorteilhaft angesehen, wenn das Tragfederelement als biegsame Blattfeder aus einem faserverstärkten Kunststoff (FVK) oder aus einem Metall besteht. Die Vorteile solcher FVK liegen insbesondere darin, dass Setzerscheinungen oder dynamische Verhärtungen vermieden werden und das Leichtbau ermöglicht ist.

In einer weiteren vorteilhaften Ausbildung ist das Tragfederelement als Ringfeder, vorzugsweise aus faserverstärktem Kunststoff oder Metall ausgebildet. Neben den bereits genannten Vorteilen ergibt sich hier zusätzlich ein sehr geringer Bauraum bei hoher Tragfähigkeit.

Ein besonders einfach gestalteter Aufbau des erfindungsgemäßen Feder-Dämpfungs-Mechanismus lässt sich dadurch erreichen, dass das Tragfederelement mit dem einen Ende seiner Längserstrechung oder radialen Ausdehnung an der schwingungssteifen Struktur und mit seinem anderen axialen oder radialen Ende das genannte wenigstens ein elastomeres Feder-Dämpferelement trägt, wobei letzteres über ein gesondertes oder mit dem Elastomer zu einem Bauteil verbundenen Befestigungselement mit dem zu lagernden Gegenstand verbunden ist.

Der hier vorgestellte Feder-Dämpfungsmechanismus wird zweckdienlich mit einer schwingungssteifen Struktur verbunden, die beispielsweise als Chassis einer Maschine oder als Fahrzeugkarosserie ausgebildet ist, und trägt über das genannte wenigstens eine elastomere Feder-Dämpferelement und das erwähnten Verbindungselement vorzugsweise ein Antriebsaggregat wie ein Antriebsmotor oder ein Getriebe eines Kraftfahrzeuges, eine Abgasanlage, ein Lenkungs- oder ein Fahrzeugfahrwerksbestandteil.

Zur Begrenzung der Auslenkbewegung des Reibungsdämpfers kann in dem Feder-Dämpfungsmechanismus ein mit einer schwingungssteifen Struktur verbundener mechanischer Anschlag vorgesehen sein, gegen den zumindest ein Dämpferkörper anlegbar ist.

In einer anderen Ausgestaltung der Erfindung kann vorgesehen sein, dass das Tragfederelement als ein die schwingende Masse abstützender Kragarm beispielsweise in Form eines Karosserie-Kragarms ausgebildet ist, oder dass ein solcher Kragarm das Tragfederelement trägt, wobei dieser insbesondere zur Lagerung eines Kraftfahrzeug-Motors dienen kann.

Eine andere Ausgestaltung der Erfindung betrifft das Tragfederelement dahingehend, dass dieses als Deckel eines den Reibungsdämpfer umschließenden Lagergehäuses ausgebildet ist. Hierdurch erhält man eine hohe Integration und ein kompakte Bauweise.

Hinsichtlich des elastomeren Feder-Dämpferelements wird es als besonders vorteilhaft angesehen, wenn dieses mit einer hohen Steifigkeit in der Hauptdämpfungsrichtung sowie mit einer geringen Steifigkeit senkrecht zur Hauptdämpfungsrichtung ausgebildet und/oder ausgerichtet ist.

Dagegen sollten die schwingungsdämpfend gegeneinander wirkenden Dämpferkörper des Reibungsdämpfers über zumindest ein Lager mit hoher axialer Steifigkeit mit wenigstens einem Tragfederelement beziehungsweise mit einer schwingungssteifen Struktur oder einem biegesteifen Träger verbunden sein.

Eine andere Variante der Erfindung ist dadurch gekennzeichnet, dass die Lager mit der hohen axialen Steifigkeit jeweils mit einer Blattfeder verbunden sind, deren Enden zwischen zwei schwingungssteifen Strukturen befestigt sind. Bei einem solchen Feder-Dämpfungsmechanismus kann darüber hinaus vorgesehen sein, dass die Blattfedern mechanisch vorgespannt sind und/oder dass die beiden schwingungssteifen Strukturen als biegesteife Träger ausgebildet sind, die ihrerseits an einem Maschinenchassis oder einer Fahrzeugkarosserie befestigt sind.

Ein anderer erfindungsgemäß ausgebildeter Feder-Dämpfungsmechanismus kennzeichnet sich dadurch aus, dass der Reibungsdämpfer in einem Ringraum einer Feder eingeschlossen ist, wobei diese Feder eine Ringfeder ist oder aus zwei zueinander geometrisch konjugiert ausgebildeten und miteinander verbundenen Ringfedern aufgebaut ist.

Bei einem solchen Feder-Dämpfungsmechanismus kann zudem vorgesehen sein, dass das Tragfederelement, die Blattfedern, die Ringfeder und/oder die geometrisch konjugiert ausgebildeten Federn mit ihrem einen Ende über jeweils ein erstes elastomeres Feder-Dämpferelement mit wenigstens einer schwingungssteifen Struktur sowie mit ihrem anderen Ende über ein zweites elastomeres Feder-Dämpferelement mit dem zu lagernden Bauteil verbunden sind.

Eine andere technische Ausbildung des erfindungsgemäßen Feder-Dämpfungsmechanismus besteht darin, dass der Reibungsdämpfer derart zu dem ihm zugeordneten Tragfederelement ausgerichtet ist, dass dessen einer Dämpferkörper über ein Lager mit hoher axialer Steifigkeit mit einem Tragfederelement und mit dem anderen Dämpferkörper über ein weiteres Lager mit hoher axialer Steifigkeit an der gleichen schwingungssteifen Struktur angelenkt ist, an der auch das Tragfederelement befestigt ist.

Bei einem solchen sehr klein bauenden Feder-Dämpfungsmechanismus ist der Reibungsdämpfer vorzugsweise unter einem Winkel von 15° bis 75° sowie äußerst vorzugsweise unter einem Winkel von 30° bis 60° zwischen dem Tragfederelement und der schwingungssteifen Struktur ausgerichtet.

Eine andere Ausgestaltung der Erfindung sieht vor, dass bei einem Feder-Dämpfungsmechanismus der steuerbare Reibungsdämpfer im Ringraum einer Feder angeordnet ist, dass sich die Feder einenends ebenso wie der eine Dämpferkörper des Reibungsdämpfer auf einer biegsamen Blattfeder abstützt, die an der schwingungssteifen Struktur befestigt ist. Darüber hinaus stützen sich die Feder anderenends sowie der andere Reibkörper des Reibungsdämpfer an einem biegesteifen Verbindungselement ab, wobei letzteres über das Elastomer und ein Befestigungselement mit dem zu lagernden Bauteil verbindbar sind.

Zur Verbesserung der Funktionsfähigkeit des Feder-Dämpfungsmechanismus sowie zum Ausgleich eines Versatzes bei der Betätigungsauslenkung einer Blatt- oder Ringfeder ist erfindungsgemäß darüber hinaus vorgesehen, dass die Verbindungsstelle zwischen den Dämpferkörpern des Reibungsdämpfers zu den Lagern mit hoher axialer Steifigkeit gelenkig ausgebildet sind.

In einer anderen Ausgestaltung der Erfindung ist vorgesehen, dass der Reibungsdämpfer als Linearlager mit elektrisch einstellbaren Reibwiderstand ausgebildet ist, bei dem zwei in der Hauptdämpfungsrichtung geradlinig aneinander abgleitende Reibpartner durch die Einwirkung von normal zur Gleitfläche wirkenden Kräften aufeinander reiben. Dabei werden die Reibkräfte des steuerbaren elektrischen Reibungsdämpfers durch ein elektromagnetisches Feld aufgebracht werden, welches die Reibpartner der Dämpferkörper gegeneinander verspannt. Dazu kann der elektrisch steuerbare Reibungsdämpfer eine elektrische Spule umfassen, in deren hohlzylindrischen Innenraum der andere Dämpferkörper axial verschiebbar angeordnet ist. Die Betätigungskraft auf die Reibpartner kann aber auch durch andere elektrische, hydraulische oder pneumatische Aktuatoren aufgebracht werden. Durch eine solche Ausbildung mit einer entsprechend ausgelegten Steuerung lässt sich in idealer Weise jegliche Dämpfungscharakteristik bekannter Dämpfungsmaterialien und - prinzipien simulieren.

Zudem kann vorteilhaft vorgesehen sein, dass die Dämpferkörper vorzugsweise als dünne und biegsame sowie einen Axialversatzausgleich zulassende Stahlfedern ausgebildet sind, die gegeneinander gerichtete Reibbeläge aufweisen.

In der Ausführungsform eines Motorlagers eines Kraftfahrzeuges ist der erfindungsgemäße Feder-Dämpfungsmechanismus so ausgebildet, dass dieser über einen als Kragarm ausgebildeten biegesteifen Träger verfügt, wobei der Kragarm mittels Befestigungselemente mit einer schwingungssteifen Struktur des Kraftfahrzeuges wie beispielsweise ein Fahrzeugholm verbindbar ist. Dieser Kragarm trägt an seiner von der schwingungssteifen Struktur wegweisenden Seite eine biegsame Feder, an deren oberen freien Ende ein elastomer gelagertes Verbindungselement befestigt ist. An der Unterseite dieser Blattfeder ist zudem ein Dämpferkörper befestigt, der als eine einen Reibkörper tragende biegsame Stahlfeder ausgebildet ist. Diese Stahlfeder ist mitsamt ihrem Reibkörper in einen hohlzylindrischen Innenraum eines als elektrische Spule ausgebildeten zweiten Dämpferkörper axial verschiebbar angeordnet, wobei diese Spule auf der zur Unterseite der Blattfeder weisenden Oberseite eines an dem Kragarm ausgebildeten biegesteifen Auslegers befestigt ist.

Zum besseren Verständnis der Erfindung werden nachfolgend einige Ausführungsformen von erfindungsgemäß ausgebildeten Feder-Dämpfungsmechanismen erläutert, die in der beigefügten Zeichnung schematisch dargestellt sind. Im einzelnen zeigen:
- Fig. 1: einen Feder-Dämpfungsmechanismus mit einer Blattfeder und einem Anschlag,
- Fig. 2: einen Feder-Dämpfungsmechanismus mit einem biegesteifen Träger,
- Fig. 3: einen Feder-Dämpfungsmechanismus mit zwei biegesteifen Trägern,
- Fig. 4: einen Feder-Dämpfungsmechanismus mit einem schräggestellten Reibungsdämpfer,
- Fig. 5: einen Feder-Dämpfungsmechanismus mit einem Reibungsdämpfer in einer Ringfeder,
- Fig. 6: einen Feder-Dämpfungsmechanismus mit einem Reibungsdämpfer in zwei miteinander verbundenen und konjugiert zueinander geformten Federn,
- Fig. 7: einen Feder-Dämpfungsmechanismus mit einem Reibungsdämpfer in einer Schraubenfeder,
- Fig. 8: ein in einem Kragarm integrierten Feder-Dämpfungsmechanismus, und
- Fig. 9: einen Querschnitt AA durch den Feder-Dämpfungsmechanismus gemäß Fig. 8.

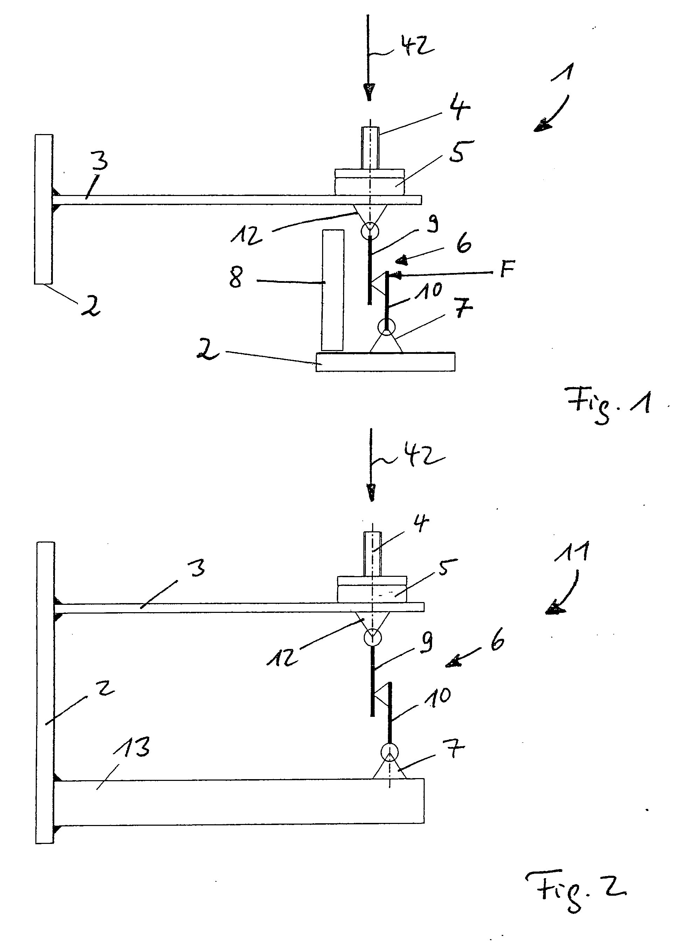

Demnach zeigt Fig. 1 einen schematischen Querschnitt durch einen Feder-Dämpfungsmechanismus 1, bei dem ein Tragfederelement 3 in Form einer biegsamen Blattfeder an einer schwingungssteifen Struktur 2 befestigt ist. An der Oberseite des freien Endes dieses Tragfederelementes 3 ist ein Befestigungselement 4 angeordnet, welches sich über einen Elastomerkörper 5 an der Blattfeder 3 abstützt. Dieses Befestigungselement 4 dient zur Aufnahme eines von dem Feder-Dämpfungsmechanismus 1 zu lagernden und hier nicht gesondert dargestellten Bauteils. Der Elastomerkörper 5 kann mit dem Befestigungselement 4 zusammen als ein einstückiges sogenanntes Gummi-Metall-Bauteil ausgebildet sein. Zudem ist der Elastomerkörper 5 so ausgebildet und/oder ausgerichtet, dass dieser eine hohe Vertikalsteifigkeit und eine geringe Horizontalsteifigkeit aufweist. Er ist daher sehr gut dazu geeignet, einerseits eine auf den Feder-Dämpfungsmechanismus 1 wirkende mechanische Last an das Tragfederelement 3 weiterzuleiten, zudem nimmt dieser auch störende Horizontalschwingungen energieumwandelnd auf, so dass diese nicht in den Feder-Dämpfungsmechanismus 1 weitergeleitet werden. Wie dieser Darstellung entnehmbar ist, greift die auf den Feder-Dämpfungsmechanismus 1 wirkende Last in der Richtung an, die hier auch als Hauptdämpfungsrichtung 42 definiert wird.

Unterhalb des Befestigungsortes für den Elastomerkörper 5 ist an dem Tragfederelement 3 ein Lager 12 mit hoher axialer Steifigkeit angeordnet, an dem seinerseits ein erster Dämpferkörper 9 eines Reibungsdämpfers 6 gelenkig befestigt ist. Dieser Reibungsdämpfer 6 umfasst noch einen zweiten Dämpferkörper 10, der mit dem ersten Dämpfungskörper 9 in mechanische Wechselwirkung steht. Dazu verfügen diese beiden Dämpferkörper 9, 10 über Reibbeläge, die mittels einer steuerbaren und /oder regelbaren Anpresskraft F gegeneinander pressbar sind. Diese Anpresskraft F wird vorzugsweise elektromechanisch von einer hier nicht dargestellten elektrischen Spule aufgebracht, die von einem Steuerungsund Regelungsgerät mit einer elektrischen Spannung versorgt wird.

Wie Fig. 7 zudem zeigt, ist auch der Dämpferkörper 10 in einem Lager 7 mit hoher axialer Steifigkeit gelagert, welches seinerseits mit der bereits genannten schwingungssteifen Struktur 2 verbunden ist. Darüber hinaus ist ein mechanischer Anschlag 8 erkennbar, der die Auslenkung der Dämpferkörper 9, 10 beispielsweise bei einer Fehlfunktion begrenzt und/oder als Widerlager für sehr hohe Anpresskräfte F auf den Dämpferkörper 9 dient.

Die Arbeitsweise dieses Feder-Dämpfungsmechanismus 1 wird wie folgt beschrieben:

In einer ersten Funktionsweise wird keine Anpresskraft F auf den Reibungsdämpfer 6 aufgebracht, so dass die Dämpfungswirkung des Feder-Dämpfungsmechanismus 1 allein durch die geringe Dämpfungseigenschaft der Blattfeder 3, des Elastomerkörpers 5 sowie der Lager 7, 12 bestimmt wird.

Sobald die Anpresskraft F erhöht wird, reiben die Dämpferkörper 9, 10 beziehungsweise deren hier nur symbolisch dargestellten Reibbeläge gegeneinander, so dass sich eine Dämpfungswirkung einstellt, die über der vorgenannten Dämpfungswirkung liegt. Durch eine Regelung der Anpresskraft F lässt sich die Dämpfungswirkung dieses Feder-Dämpfungsmechanismus beliebig einstellen. So ist es beispielsweise auch möglich, dass bei einer sehr hohen Anpresskraft F der Reibungsdämpfer 6 blockiert und somit der Federweg der Blattfeder 3 auf einen Wert Null reduziert wird. Mittels einer schnellen Steuerung- und/oder Regelung der Anpresskraft F kann so auf unterschiedliche Schwingungsfrequenzen und Schwingungsamplituden sehr schnell und variabel reagiert werden. Selbstverständlich ist dafür eine gesonderte Sensorik notwendig, die beispielsweise den Durchfederweg des Tragfederelements 3 sensiert und dem Steuerungs- und Regelungsgerät mitteilt.

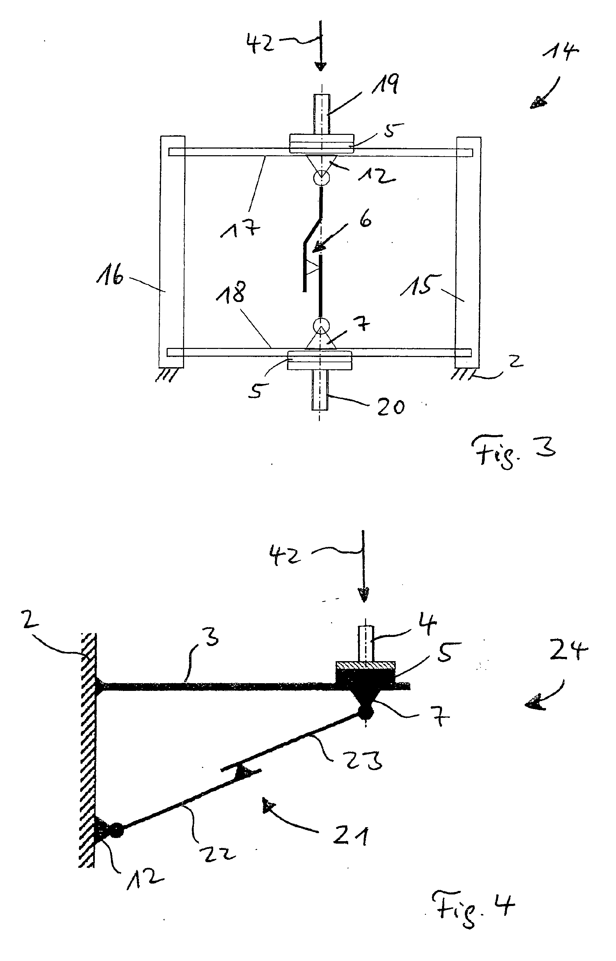

Der Aufbau des Feder-Dämpfungsmechanismus 11 gemäß Fig. 2 unterscheidet sich von dem in Fig. 1 dargestellten Feder-Dämpfungsmechanismus 1 nur dadurch, dass das Lager 7 nicht direkt an der schwingungssteifen Struktur 2 sondern an einem biegesteifen Träger 13 befestigt ist, der seinerseits mit der schwingungssteifen Struktur 2 verbunden ist. Dieser Aufbau ist vor allem dann notwenig, wenn beispielsweise ein schwingungssteifes Maschinenchassis oder eine schwingungssteife Kraftfahrzeugstruktur nicht direkt bis unterhalb des Reibungsdämpfers 6 reicht.

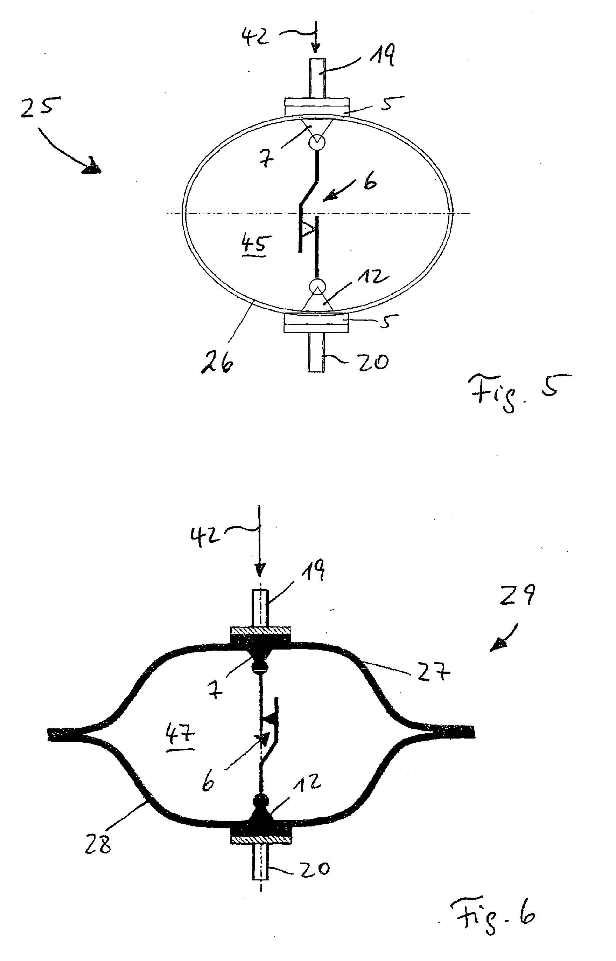

Eine weitere Variante ist in Fig. 3 dargestellt, bei der die mit dem Reibungsdämpfer 6 gelenkig verbunden Lager 7, 12 mit gegebenenfalls vorgespannten Blattfedern 17, 18 verbunden sind, die ihrerseits mit deren freien Enden in biegesteife Träger 16, 17 eingespannt sind. Wie aus dieser Darstellung ersichtlich ist, sind die biegesteifen Träger 16, 17 letztlich auch mit einer schwingungssteifen Struktur 2 verbunden. Darüber hinaus verfügt dieser Feder-Dämpfungsmechanismus 14 an den von dem Reibungsdämpfer 6 abgewandten Seiten der Blattfedern 17, 18 über jeweils ein Befestigungselement 19, 20, die einerseits zur Aufnahme des zu lagernden Bauteils dienen und mit der andererseits die auf den Feder-Dämpfungsmechanismus 14 wirkende Last mittels des Befestigungselements 20 auf ein anderes hier nicht gesondert dargestelltes Bauteil weiterleitbar ist.

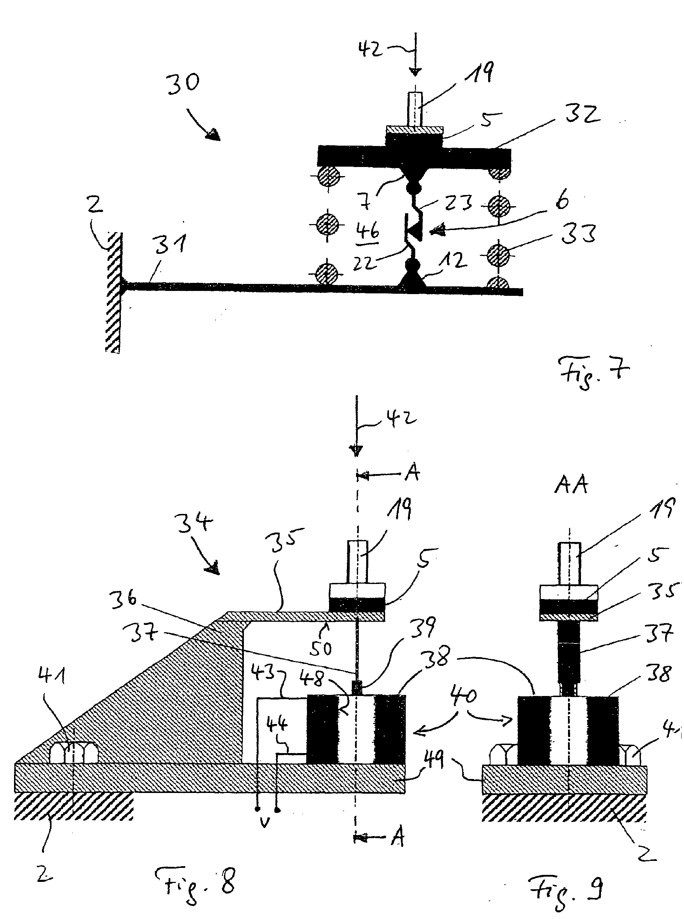

Fig. 4 zeigt einen Feder-Dämpfungsmechanismus 24, bei dem ebenfalls ein in etwa horizontal ausgerichtetes Tragfederelement 3 mit einer schwingungssteifen Struktur 2 fest verbunden ist. Dieses Tragfederelement 3 trägt auch hier an seinem freien Ende ein e-lastomergelagertes Befestigungselement 4, 5 zur Aufnahme eines zu lagernden Bauteils. Der Reibungsdämpfer 21 mit seinen Dämpferkörpern 22, 23 ist in dieser Ausführungsform der Erfindung aber nicht senkrecht nach unten sondern unter Zwischenschaltung der Schwenklager 7, 12 mit einem Winkel von ca. 45° nach links zu der schwingungssteifen Struktur 2 geführt. Durch diese Konstruktion lässt sich eine besonders kompakte Bauweise erreichen.

In der in Fig. 5 gezeigten Weiterbildung der Erfindung ist der Reibungsdämpfer 6 in demjenigen Ringraum 45 angeordnet, der durch eine Ringfeder 26 aufgespannt ist. Auch hier sind insgesamt zwei Befestigungselemente 19, 20 an gegenüberliegenden Stellen der Ringfeder 26 unter Zwischenlage jeweils eines Elastomerkörpers 5 befestigt. Wie dieser Darstellung leicht entnehmbar ist, wird ein solcher Feder-Dämpfungsmechanismus 25 vorzugsweise dann eingesetzt, wenn keine großen Lasten aus Richtung des Pfeils 42 auf den Feder-Dämpfungsmechanismus wirken, so dass eine unmittelbare Ableitung von hohen Lasten direkt in eine tragende und schwingungssteife Struktur nicht notwendig ist.

Unter den gleichen Voraussetzungen ist der Feder-Dämpfungsmechanismus 29 gemäß Fig. 6 einsetzbar. Auch hier befindet sich der Reibungsdämpfer 6 in einem Ringraum 47, der in diesem Fall jedoch von zwei Blattfedern 27, 28 geformt wird, die zueinander konjugiert geformt und miteinander verbunden sind.

Demgegenüber zeigt Fig. 7 einen Feder-Dämpfungsmechanismus 30, bei dem die an der schwingungssteifen Struktur 2 befestigte Blattfeder 31 und eine auf dieser Blattfeder 31 abgestützten Schraubenfeder 33 zueinander in Reihe geschaltet angeordnet sind. Zudem ist der Reibungsdämpfer 6 in diesem Ausführungsbeispiel der Erfindung zu der Schraubenfeder 33 dadurch parallel geschaltet, dass diese in dem durch die Feder 33 gebildeten Ringraum 46 angeordnet ist. Wie dieser Darstellung leicht entnehmbar ist, sind auch hier die beiden Dämpferkörper 22, 23 des Reibungsdämpfers 6 in axial steifen Schwenklagern 7, 12 aufgenommen, die ihrerseits auf der Oberseite der Blattfeder 31 beziehungsweise an der Unterseite eines biegesteifen Verbindungselementes 32 befestigt sind. Dieses Verbindungselement 32 trägt zudem an dessen Oberseite in bekannter Weise einen in einem Feder-Dämpferelement 5 mit den genannten Eigenschaften gelagertes Befestigungselement 19, an dem das zu lagernde Bauteil befestigbar ist.

Schließlich zeigt Fig. 8 einen als Motorlager ausgebildeten Feder-Dämpfungsmechanismus 34, der beispielsweise aus einem Faserverbundwerkstoff hergestellt ist. Dieses Motorlager besteht zunächst aus einem als Kragarm 36 ausgebildeten biegesteifen Träger 36, der mit Hilfe von Befestigungselementen wie Schrauben 41 an einer schwingungssteifen Fahrzeugstruktur 2 wie beispielsweise einen Fahrzeugholm befestigbar ist. An seiner von der Fahrzeugstruktur 2 wegweisenden Seite ist an dem Kragarm 36 eine biegsame Blattfeder 35 ausgebildet, auf deren Oberseite ein Befestigungselement 19 über einen Elastomerkörper 5 befestigt ist.

An der Unterseite 50 der Blattfeder 35 ist zum Ausgleich von gegebenenfalls auftretenden Fluchtungsfehlern oder zum Ausgleich des bei einer Durchbiegung der Blattfeder 35 auftretenden Axialversatzes eine dünne Stahlfeder 37 befestigt, an deren unterem Ende ein Dämpferkörper 39 befestigt oder ausgebildet ist. Dieser Dämpferkörper 39 ragt in den zylindrischen Hohlraum 48 eines zweiten Dämpferkörpers 38 ein, der hier als linear wirksames Dämpfungselement ausgebildet und auf einem Ausleger 49 des Kragarms 36 befestigt ist. Im konkreten Fall handelt es sich um eine Magnetspule, die über elektrische Leitungen 43, 44 mit einer Spannungsquelle "V" verbunden ist. Diese Spannungsquelle ist beispielsweise ein Steuerungs- und Regelungsgerät oder eine von einem solchen Gerät gesteuerte und/oder geregelte Spannungsquelle. Fig. 9 zeigt einen diesbezüglichen Querschnitt AA gemäß Fig. 8.

Wie die vorgezeigten Konstruktionsformen der erfindungsgemäßen Feder-Dämpfungsmechanismen leicht erkennen lassen, führt eine Blockade des Reibungsdämpfers 6 dazu, dass keine über die Dämpfungseigenschaften der Tragfederelemente hinausgehenden axialen Dämpfungskräfte mehr wirken.

### Bezugszeichenliste

- 1: Feder-Dämpfungsmechanismus
- 2: Chassis; Karosserie; schwingungssteife Struktur
- 3: Tragfederelement
- 4: Befestigungselement zum Antriebsaggregat
- 5: Elastomerkörper, Elastomer, elastomeres Feder-Dämpferelement
- 6: Reibungsdämpfer
- 7: Lager mit hoher axialer Steifigkeit
- 8: Anschlag
- 9: Dämpferkörper
- 10: Dämpferkörper
- 11: Feder-Dämpfungsmechanismus
- 12: Lager mit hoher axialer Steifigkeit
- 13: Biegesteifer Träger
- 14: Feder-Dämpfungsmechanismus
- 15: Biegesteifer Träger
- 16: Biegesteifer Träger
- 17: Blattfeder, ggf. vorgespannt
- 18: Blattfeder, ggf. vorgespannt
- 19: Befestigungselement zum Antriebsaggregat
- 20: Besteigungselement zur Karosserie
- 21: Reibungsdämpfer
- 22: Dämpferkörper
- 23: Dämpferkörper
- 24: Feder-Dämpfungsmechanismus
- 25: Feder-Dämpfungsmechanismus
- 26: Biegsame Ringfeder
- 27: Konjugiert geformte Blattfeder
- 28: Konjugiert geformte Blattfeder
- 29: Feder-Dämpfungsmechanismus
- 30: Feder-Dämpfungsmechanismus
- 31: Biegsame Blattfeder
- 32: Biegesteifes Verbindungselement
- 33: Feder
- 34: Feder-Dämpfungsmechanismus
- 35: Biegsame Blattfeder
- 36: Biegesteifer Träger, Kragarm
- 37: Dünne Stahlfeder
- 38: Dämpferkörper
- 39: Dämpferkörper
- 40: Reibungsdämpfer
- 41: Befestigungsschraube
- 42: Hauptdämpfungsrichtung
- 43: Steuerungsleitung
- 44: Steuerungsleitung
- 45: Ringraum
- 46: Ringraum
- 47: Ringraum
- 48: Innenraum der Spule
- 49: Ausleger für die Spule
- 50: Unterseite der Feder 35
- F: Anpresskraft
- V: Spannungsquelle, Steuergerät

## Patentansprüche

1. Feder-Dämpfungsmechanismus zur Dämpfung von mechanischen Schwingungen, mit wenigstens einem Tragfederelement und mindestens einem Dämpfungselement, die zwischen einer schwingungssteifen Struktur und einem schwingbar gelagerten Bauteil angeordnet sind,
**dadurch gekennzeichnet,**
**dass** das Tragfederelement (3) in der Hauptdämpfungsrichtung (42) des Feder-Dämpfungsmechanismus (1, 14, 24, 25, 29, 30, 30, 34) über keine wesentlichen Dämpfungseigenschaften verfügt,
**dass** das Dämpfungselement als ein in Hauptdämpfungsrichtung (42) wirkender schaltund/oder regelbarer Reibungsdämpfer (6, 21, 40) ausgebildet ist,
und **dass** der Feder-Dämpfungsmechanismus (1) mindestens ein elastomeres Feder-Dämpferelement (5) aufweist, welches in mindestens einer zur Hauptdämpfungsrichtung (42) senkrechten Richtung schwingungsdämpfend wirkt.

2. Feder-Dämpfungsmechanismus nach Anspruch 1, **dadurch gekennzeichnet, dass** der Reibungsdämpfer (6, 21, 40) hinsichtlich der in diesem wirksamen Reibkräfte und Dämpfungseigenschaften elektrisch schalt- und/oder regelbar ausgebildet ist.

3. Feder-Dämpfungsmechanismus nach Anspruch 1 oder Anspruch 2, **dadurch gekennzeichnet, dass** das Tragfederelement (3) als biegsame Blattfeder (31) aus faserverstärktem Kunststoff oder Metall ausgebildet ist.

4. Feder-Dämpfungsmechanismus nach wenigstens einem der Anspruch 1 bis 3,
**dadurch gekennzeichnet, dass** das Tragfederelement (3) mit dem einen Ende seiner Längserstrechung oder radialen Ausdehnung an der schwingungssteifen Struktur (2) und seinem anderen axialen oder radialen Ende das wenigstens eine elastomere Feder-Dämpferelement (5) trägt, wobei letzteres (5) über ein Befestigungselement (4) mit dem zu lagernden Bauteil verbunden ist.

5. Feder-Dämpfungsmechanismus nach Anspruch 4, **dadurch gekennzeichnet, dass** die schwingungssteife Struktur (2) als Chassis einer Maschine oder als Fahrzeugkarosserie ausgebildet ist.

6. Feder-Dämpfungsmechanismus nach Anspruch 4, **dadurch gekennzeichnet, dass** das mit dem wenigstens einen elastomeren Feder-Dämpferelement (5) verbundene Bauteil ein Antriebsaggregat wie ein Antriebsmotor oder ein Getriebe eines Kraftfahrzeuges, eine Abgasanlage, ein Lenkungs- oder ein Fahrzeugfahrwerksbestandteil ist.

7. Feder-Dämpfungsmechanismus nach einem oder mehreren der vorherigen Ansprüche, **dadurch gekennzeichnet, dass** der Reibungsdämpfer (6, 21, 40) zur Begrenzung seiner Auslenkbewegung gegen einen mechanischen Anschlag (8) auslenkbar ist, der mit der schwingungssteifen Struktur (2) verbunden ist.

8. Feder-Dämpfungsmechanismus nach einem oder mehreren der vorherigen Ansprüche, **dadurch gekennzeichnet, dass** das Tragfederelement (3) als ein die schwingende Masse abstützenden Kragarm (36) ausgebildet ist, insbesondere als Lager für einen Kfz-Motor in Form eines Karosserie-Kragarms.

9. Feder-Dämpfungsmechanismus nach einem oder mehreren der vorherigen Ansprüche, **dadurch gekennzeichnet, dass** das Tragfederelement (3) als Deckel eines den Reibungsdämpfer (6, 21, 40) umschließendes Lagergehäuse ausgebildet ist.

10. Feder-Dämpfungsmechanismus nach einem oder mehreren der vorherigen Ansprüche, **dadurch gekennzeichnet, dass** das elastomere Feder-Dämpferelement (5) mit einer hohen Steifigkeit in der Hauptdämpfungsrichtung (42) sowie mit einer geringen Steifigkeit senkrecht zur Hauptdämpfungsrichtung (42) ausgebildet und/oder ausgerichtet ist.

11. Feder-Dämpfungsmechanismus nach einem oder mehreren der vorherigen Ansprüche, **dadurch gekennzeichnet, dass** die schwingungsdämpfend gegeneinander wirkenden Dämpferkörper (9, 10, 22, 23, 38, 39) des Reibungsdämpfers (6, 21, 40) über zumindest ein Lager (7, 12) mit hoher axialer Steifigkeit mit wenigstens einem Tragfederelement (3) beziehungsweise mit der schwingungssteifen Struktur (2) oder einem biegesteifen Träger (13) verbunden sind.

12. Feder-Dämpfungsmechanismus nach einem oder mehreren der vorherigen Ansprüche, **dadurch gekennzeichnet, dass** die Lager (7, 12) jeweils mit einer Blattfeder (17, 18) verbunden sind, deren Enden zwischen zwei schwingungssteifen Strukturen befestigt sind.

13. Feder-Dämpfungsmechanismus nach einem oder mehreren der vorherigen Ansprüche, **dadurch gekennzeichnet, dass** die Blattfedern (17, 18) mechanisch vorgespannt sind und/oder dass die beiden schwingungssteifen Strukturen als biegesteife Träger (15, 16) ausgebildet sind, die ihrerseits an einem Maschinenchassis (2) oder einer Fahrzeugkarosserie befestigt sind.

14. Feder-Dämpfungsmechanismus nach einem oder mehreren der vorherigen Ansprüche, **dadurch gekennzeichnet, dass** der Reibungsdämpfer (6, 21, 40) in einem Ringraum (45, 47) einer Feder eingeschlossen ist, wobei diese aus einer Ringfeder (26) oder aus zwei zueinander geometrisch konjugiert ausgebildeten und miteinander verbundenen Ringfedern (28, 29) ausgebildet sind.

15. Feder-Dämpfungsmechanismus nach einem oder mehreren der vorherigen Ansprüche, **dadurch gekennzeichnet, dass** das Tragfederelement (3), die Blattfedern (17, 18), die Ringfeder (26) und/oder die geometrisch konjugiert ausgebildeten Federn (28, 29) enenends über jeweils ein erstes elastomeres Feder-Dämpferelement (5) mit wenigstens einer schwingungssteifen Struktur (2) sowie anderenends über ein zweites elastomeres Feder-Dämpferelement (5) mit dem zu lagernden Bauteil verbunden sind.

16. Feder-Dämpfungsmechanismus nach einem oder mehreren der vorherigen Ansprüche, **dadurch gekennzeichnet, dass** der Reibungsdämpfer (21) derart zu dem ihm zugeordneten Tragfederelement (3) ausgerichtet ist, dass dessen einer Dämpferkörper (23) über ein Lager (7) mit hoher axialer Steifigkeit mit dem Tragfederelement (3) und mit dem anderen Dämpferkörper (22) über ein weiteres Lager (12) mit hoher axialer Steifigkeit an der gleichen schwingungssteifen Struktur (2) angelenkt ist, an der auch das Tragfederelement (3) befestigt ist.

17. Feder-Dämpfungsmechanismus nach Anspruch 16, **dadurch gekennzeichnet, dass** der Reibungsdämpfer (21) unter einem Winkel von 15° bis 75°, vorzugsweise von 30° bis 60° zwischen dem Tragfederelement (3) und der schwingungssteifen Struktur (2) ausgerichtet ist.

18. Feder-Dämpfungsmechanismus nach einem oder mehreren der vorherigen Ansprüche, **dadurch gekennzeichnet, dass** der elektrisch steuerbare Reibungsdämpfer (6, 21, 40) im Ringraum (45) einer Feder (33) angeordnet ist, dass sich die Feder (33) einenends sowie der eine Dämpferkörper (22) des Reibungsdämpfer (6) auf einer biegsamen Blattfeder (31) abstützt, die an der schwingungssteifen Struktur (2) befestigt ist, und dass sich die Feder (33) anderenends sowie der andere Reibkörper (23) des Reibungsdämpfer (6) an einem biegesteifen Verbindungselement (32) abstützen, wobei letzteres über das elastomere Feder-Dämpferelement (5) und ein Befestigungselement mit dem zu lagernden Bauteil verbindbar sind.

19. Feder-Dämpfungsmechanismus nach einem oder mehreren der vorherigen Ansprüche, **dadurch gekennzeichnet, dass** die Verbindungsstelle zwischen den Dämpferkörpern (9, 10, 22, 23, 38, 39) des Reibungsdämpfers (6, 21, 40) zu den Lagern (7, 12) mit hoher axialer Steifigkeit gelenkig ausgebildet sind.

20. Feder-Dämpfungsmechanismus nach einem oder mehreren der vorherigen Ansprüche, **dadurch gekennzeichnet, dass** der Reibungsdämpfer (6, 21, 40) als Linearlager mit elektrisch einstellbaren Reibwiderstand ausgebildet ist.

21. Feder-Dämpfungsmechanismus nach einem oder mehreren der vorherigen Ansprüche, **dadurch gekennzeichnet, dass** die Dämpferkörper (9, 10, 22, 23, 38, 39) als Stahlfedern ausgebildet sind, die gegeneinander weisende Reibbeläge aufweisen.

22. Feder-Dämpfungsmechanismus nach einem oder mehreren der vorherigen Ansprüche, **dadurch gekennzeichnet, dass** die Reibkräfte des steuerbaren elektrischen Reibungsdämpfers (6, 21, 40) durch ein elektromagnetisches Feld aufgebracht werden, welches die Reibpartner der Dämpferkörper (9, 10, 22, 23, 38, 39) gegeneinander verspannt.

23. Feder-Dämpfungsmechanismus nach einem oder mehreren der vorherigen Ansprüche, **dadurch gekennzeichnet, dass** der elektrisch steuerbare Reibungsdämpfer (6, 21, 40) über Steuerungsleitungen (43, 44) mit einem Steuerungsgerät verbunden ist.

24. Feder-Dämpfungsmechanismus nach einem oder mehreren der vorherigen Ansprüche, **dadurch gekennzeichnet, dass** der elektrisch steuerbare Reibungsdämpfer (6, 21, 40) eine elektrische Spule (38) umfasst, in deren hohlzylindrischen Innenraum (48) der zweite Dämpferkörper (39) axial verschiebbar angeordnet ist.

25. Feder-Dämpfungsmechanismus nach einem oder mehreren der vorherigen Ansprüche, **dadurch gekennzeichnet, dass** dieser Feder-Dämpfungsmechanismus (34) über einen als Kragarm (36) ausgebildeten biegesteifen Träger verfügt, dass der Kragarm (36) mittels Befestigungselemente (41) mit einer schwingungssteifen Struktur (2) verbindbar ist, dass der Kragarm (36) an seiner von der schwingungssteifen Struktur (2) wegweisenden Seite eine biegsame Feder (35) trägt, an deren freiem Ende ein Verbindungselement (19) über das elastomere Feder-Dämpfungselement (5) befestigt ist, dass an der Unterseite (50) der Blattfeder (35) ein Dämpferkörper befestigt ist, der als eine einen Reibkörper (39) tragende biegsame Stahlfeder (37) ausgebildet ist, dass die Stahlfeder (37) mitsamt ihrem Reibkörper (39) in einen hohlzylindrischen Innenraum (48) eines als elektrische Spule (38) ausgebildeten zweiten Dämpferkörper axial verschiebbar angeordnet ist, und dass die elektrische Spule (38) auf der zur Unterseite (50) der Blattfeder (35) weisenden Oberseite eines an dem Kragarm (36) ausgebildeten biegesteifen Auslegers (49) befestigt ist.
